(19) Europäisches Patentamt
European Patent Office
Office européen des brevets

(11) EP 0 363 237 B2

(12) NOUVEAU FASCICULE DE BREVET EUROPEEN

(45) Date de publication et mention de la décision concernant l'opposition:
**18.06.1997 Bulletin 1997/25**

(45) Mention de la délivrance du brevet:
**08.12.1993 Bulletin 1993/49**

(21) Numéro de dépôt: **89402476.9**

(22) Date de dépôt: **12.09.1989**

(51) Int Cl.[6]: **G02F 1/35**, C08G 18/67, C09K 19/38

# (54) Polymères et matériaux les contenant, actifs en optique non linéaire, procédé de fabrication de ces polymères et matériaux et dispositif optoélectrique les contenant

Polymere und daraus hergestellte Materialien, mit nichtlinearen Eigenschaften, Verfahren zu deren Herstellung und daraus hergestellte optoelektrische Materialien und Gegenstände

Polymers and materials containing same having non-linear optical properties, process for their preparation and optoelectrical materials and devices containing same

(84) Etats contractants désignés:
**AT BE CH DE ES FR GB GR IT LI LU NL SE**

(30) Priorité: **16.09.1988 FR 8812080**

(43) Date de publication de la demande:
**11.04.1990 Bulletin 1990/15**

(73) Titulaire: **FLAMEL TECHNOLOGIES**
**F-69693 Venissieux Cédex (FR)**

(72) Inventeurs:
- **Mignani, Gérard**
  **F-69008 Lyon (FR)**
- **Barthelemy, Pascal**
  **F-69003 Lyon (FR)**
- **Meyrueix, Rémi**
  **F-69008 Lyon (FR)**

(74) Mandataire: **Ropital-Bonvarlet, Claude et al**
**Cabinet BEAU DE LOMENIE**
**51, avenue Jean-Jaurès**
**B.P. 7073**
**69301 Lyon Cédex 07 (FR)**

(56) Documents cités:
**EP-A- 0 243 806**
**EP-A- 0 350 112**
**EP-A- 0 350 113**
**EP-A- 0 378 185**
**JP-A-25 816 387**

- **SPIE, vol 682 (1986), pp 65-69**
- **J. Am. Chem. Soc. 87:11 (1965) pp 2443-2450**
- **Synthesis 5 (1974) pp 359-361)**
- **Nonlinear Optical Properties of Organic and Polymeric Materials, ACS Symposium Series 233 (1983) pp 109-133**
- **Makromol Chem. 194 (1993) pp 859-868**

EP 0 363 237 B2

## Description

L'invention concerne des polymères actifs en optique non linéaire permettant de réaliser des matériaux susceptibles d'application dans des dispositifs optoélectrique, et des procédés de fabrication de ces matériaux et polymères.

Elle concerne, plus particulièrement, des polymères ou matériaux présentant une forte susceptibilité quadratique ($\chi^2$). Ces polymères ou matériaux peuvent également présenter une bonne susceptibilité cubique ($\chi^3$). En effet, pour être actif en optique non linéaire, et comme cela sera expliqué plus en détails ci-après, un matériau doit avoir une susceptibilité d'ordre supérieur à 1 non nulle, et de préférence une susceptibilité d'ordre pair non nulle.

On connaît déjà de nombreux polymères présentant la propriété d'être actif en optique non linéaire. Dans certains cas, cette activité est supérieure à celle des produits inorganiques couramment utilisés.

Les polymères utilisés en **ONL** possèdent généralement des groupements conjugués à électrons délocalisés qui leur confèrent une valeur importante de la susceptibilité cubique ($\chi^3$).

Par ailleurs, pour certains polymères, comme ceux dont il est question dans la présente invention, les groupements responsables de l'activité **ONL** sont non centrosymétriques et ont une forte hyperpolarisabilité du 2ème ordre $\beta$.

Ces groupements non centrosymétriques sont, le plus souvent, des groupements conjugés à transfert de charges dont l'orientation au sein du matériau par un champ électrique de polarisation rend le matériau non centrosymétrique. Celui-ci possède alors une susceptibilité quadratique ($x^2$) non nulle.

Jusqu'à présent, ces polymères étaient constitués par des polymères à chaîne classique, tels que des polyoléfines, polyacrylates, polyméthacrylates, polychloroacrylates ou polysiloxane, par exemple, sur lesquels étaient greffés des groupements polaires à transfert de charge.

A titre d'exemple, on peut citer les brevets européen n° 0 262 680 et français n° 2 597 109. Ces polymères présentant toutefois certains inconvénients et, notamment, une faible conservation de leur propriété en optique non linéaire. En effet, les segments greffés doivent présenter une certaine mobilité pour permettre leur orientation dans un champ électrique. Cependant, ils conservent toujours une mobilité résiduelle qui leur permet, au cours du temps, de perdre leur orientation entraînant une diminution de la non centrosymétrie électronique générée par le champ électrique et, de ce fait une diminution de l'activité en optique non linéaire. Ce phénomène est illustré dans l'article de C. YE et al "M.R.S. Symposium Proc" vol 109 (Non linear opt. Proc. of polymères) p. 263, ed. J. HEEGER 1988.

Un autre inconvénient de ces polymères réside dans le fait que le nombre de groupements polaires à transfert de charges est généralement faible, car il est fonction de la structure du polymère. De plus, le nombre de groupements greffés ne peut être très élevé sans entraîner une modification importante des propriétés du polymère.

La demande de brevet européen n° 0 243 806 décrit des polyuréthanes ayant une activité en optique non linéaire, dont le monomère comprend une unité polaire à transfert de charge du type cyano-quino diméthane, de formule suivante :

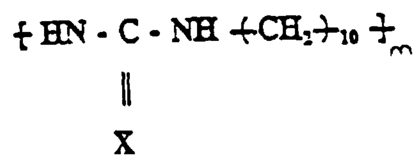

**X** = quinodiméthane, m >3.

Ces polymères n'appartiennent pas au domaine de la présente invention qui est celui de l'électrooptique. Ils sont, au contraire, destinés à la génération de second harmonique dans le domaine des rayonnements visibles. Leur substituant **X**, de taille réduite, leur confère typiquement une transparence dans le visible.

Enfin, ils sont caractérisés par une activité électrooptique relativement faible.

On connaît, également, des matériaux présentant une activité en optique non linéaire constitués par une matrice, généralement un polymère, dans laquelle est dissous un composé actif en optique non linéaire du type molécule conjuguée à transfert de charges.

Toutefois, ces composés sont généralement peu solubles dans la matrice et possèdent, également, une mobilité résiduelle dans celle-ci qui provoquera, au cours du temps, une désorientation de ces composés rendant ces matériaux centrosymétriques d'un point de vue de charges électriques.

En effet, l'activité quadratique en optique non linéaire est engendrée par la délocalisation des électrons et une non centrosymétrie de charges importantes à l'échelle moléculaire et à l'échelle du matériau.

Pour résoudre notamment ces inconvénients, l'invention propose un polymère présentant une bonne activité en optique non linéaire, notamment une bonne susceptibilité quadratique, dont les groupements polaires à transfert de charges font partie du motif de répétition ou récurrent du polymère, ce qui supprime leur mobilité résiduelle permettant

ainsi de réaliser un matériau conservant son activité en optique non linéaire au cours du temps. Par ailleurs, comme les groupements polaires à transfert de charges font partie intégrante de la chaîne macromoléculaire du polymère, leur nombre dans celle-ci sera très élevé, ce qui améliore l'activité en optique non linéaire du matériau.

A cet effet, l'invention propose des polymères actifs en optique non linéaire, du type de ceux ayant un motif récurrent constitué par un premier composé difonctionnel et un second composé difonctionnel, liés entre eux par l'intermédiaire de leurs fonctions réactives respectives pour la polymérisation, au moins l'un des composés difonctionnels comprenant un groupement polaire à transfert de charges de structure (**I**) suivante :

**D - (radical à électrons délocalisés) - A**

**A** étant un radical accepteur d'électrons et **D** un radical donneur d'électrons,
caractérisés :

- en ce que le radical à électrons délocalisés est l'une des deux structures suivantes :

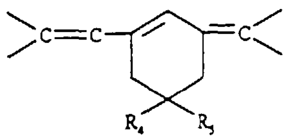 ; 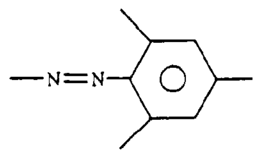

(I) (II)

dans lesquelles $R_4$ et $R_5$ sont identiques ou différents et représentent l'hydrogène ou un radical méthyle, éthyle ou propyle,

- en ce que les fonctions réactives pour la polymérisation sont portées par le radical donneur d'électrons **D**.
- et en ce que les radicaux donneurs d'électrons (D) sont des radicaux de formule :

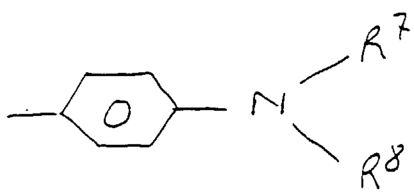

dans laquelle $R_7$ et $R_8$ identiques ou différents sont des radicaux comprenant une fonction réactive pour la polymérisation. De préférence, $R_7$ et $R_8$ ont la structure suivante :

$$-(CH_2)_m\ OH \quad ; \quad -(CH_2)_p\ CH=CH_2 \quad .$$

dans lesquelles m et p sont des nombres entiers, m étant compris entre 1 et 6 et p entre 0 et 6.

Comme fonctions réactives pour la polymérisation convenable pour l'invention et qui peuvent se retrouver dans le premier et/ou le second composé difonctionnel, on peut citer, par exemple, les fonctions alcools, amines, isocyanates, allyliques, vinyliques, acides, anhydrides, halogénures d'acide et époxy.

Ainsi, les polymères de l'invention peuvent être du type polyester, polyuréthanne, polyamide, polyvinylique, polyimide, polyamidimide, polyanie, polysulfaramide, polyéther, polyesteramide, par exemple.

Les premier et second composé difonctionnels peuvent avoir les mêmes fonctions réactives ou des fonctions différentes.

Selon une autre caractéristique de l'invention, les polymères de l'invention peuvent être réticulés par addition de composés polyfonctionnels au mélange de composés difonctionnels.

Ces composés polyfonctionnels sont ceux classiquement utilisés dans le domaine des polymères pour obtenir

des produits présentant de meilleures propriétés mécaniques et, notamment, une température de transition vitreuse (**Tg**) plus élevée.

Ainsi, la mobilité résiduelle des groupements polaires à transfert de charges sera réduite et même totalement nulle.

Les radicaux accepteurs d'électrons (**A**) convenables pour l'invention sont, notamment, les radicaux nitro, cyano, - $CO_2R_g$, - $PO_3(R_g)_2$, $R_g$ étant un radical méthyle, éthyle ou propyle.

Les radicaux accepteurs d'électrons (**A**) préférés de l'invention sont les radicaux cyano et nitro, et plus particulièrement les associations cyano/cyano et cyano/nitro.

Selon une autre caractéristique de l'invention, les radicaux donneurs d'électrons (**D**) convenables pour l'invention sont notamment les radicaux de formule :

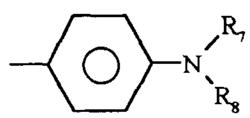

L'autre composé difonctionnel, quand il ne comprend pas de groupements polaires à transfert de charges, peut être tout composé difonctionnel couramment utilisé pour réaliser une réaction de polymérisation avec les fonctions portées par le composé difonctionnel comprenant les groupements à transfert de charges.

Ainsi, dans le cas de polymères du type polyester, on peut citer des composés à fonction acides tels que, par exemple, l'acide adipique, l'acide azélaique, l'acide sébaccique, acide 2-4 diméthyl adipique, acide orthophtalique, acide téréphtalique, acide isophtalique et naphtalène dicarboxylique, acide hexahydrophtalique, acide camphroïque.

Pour des polyamides et polyimides, les composés difonctionnels pourront être, par exemple, les diamines aliphatiques ou amatiques telles que, le 1,3 diaminopropane, le 1,4 diaminobutane, le 2-méthyl pentaéthylènediamine, le métaxyliléne diamine, l'hexaméthylène diamine, le 2,4 diaminotoluène.

Pour des polyéthers, on peut citer l'oxyde d'éthylène, l'oxyde de propylène.

Pour des polyuréthanes, on peut citer comme composés difonctionnels les polyisocyanates aliphatiques et aromatiques tels que, par exemple, l'hexaméthylène diisocyanate, le diphénylméthane-diisocyanate.

L'invention a, encore, pour objet un matériau présentant une activité en optique non linéaire comprenant comme composant actif un polymère conforme à la description ci-dessus.

Selon un premier mode de fabrication, ce matériau est obtenu, par exemple, par chauffage du polymère, à une température au moins égale à sa température de transition vitreuse (Tg). Le polymère ainsi chauffé est soumis à un champ électrique pour créer une non centrosymétrie de charges dans le matériau.

Le polymère ainsi orienté ou "activé" est alors refroidi puis est utilisé comme composant d'un dispositif électrooptique, tel que des dispositifs de traitement électronique ou purement optique, comme des transducteurs, des modulateurs, amplificateurs etc...

Selon un second mode de réalisation du procédé de fabrication du matériau de l'invention, dans le cas où le polymère utilisé est un polymère réticulé, on réalise dans un premier temps une polymérisation partielle du mélange de composés difonctionnels et polyfonctionnels puis on chauffe le prépolymère ainsi obtenu à une température supérieure à sa température de ramollissement ou température de transition vitreuse (Tg) pour obtenir une fluidité convenable permettant de réaliser l'orientation des groupements polaires à transfert de charges par application d'un champ électrique. Enfin, la polymérisation totale est réalisée selon tout procédé connu.

Ainsi, il est possible par cette technique de pouvoir orienter les groupements polaires à une température suffisamment basse pour éviter toute dégradation du polymères puis par réticulation finale, d'obtenir un matériau présentant une température de transition vitreuse élevée et donc de diminuer encore la mobilité résiduelle des groupements polaires dans le matériau.

Ainsi, l'activité en optique non linéaire du matériau sera remarquablement conservée au cours du vieillissement de celui-ci.

Le matériau peut être obtenu sous une forme quelconque, telle que film, fibre, pièce moulée ou extrudée etc.... Il peut également être utilisé pour former un revêtement, notamment selon la technique appelée "spin-coating". Sa mise en forme peut être réalisée par tout procédé comme pour la mise en forme de matière polymérisable ou polymérisée telle que, par exemple, une mise en forme par fusion, ramollissement ou par mise en solution et évaporation du solvant.

Enfin, différents additifs peuvent être ajoutés au polymère de l'invention, par exemple pour faciliter sa mise en forme. Il peut également être utilisé en mélange avec un autre polymère actif ou non actif en optique non linéaire.

Des précisions, et explications sont données ci-dessous sur l'activité des matériaux en optique non linéaire et la détermination de cette activité.

L'activité des matériaux en optique non linéaire est déterminée par la mesure des susceptibilités de second, troisième ou énième ordre.

Les susceptibilités d'un matériau sont directement reliées à la polarisation du matériau par la relation fondamentale suivante :

$$\underline{P} = \underline{Po} + \chi^{1} . \underline{E} + \chi^{2}\, \underline{E.E} + \chi^{3}\, \underline{E.E.E} + .....$$

dans laquelle : $\underline{P}$ et $\underline{Po}$ représentent la polarisation respectivement en présence et en absence de champ électromagnétique.

E représente le champ électrique d'excitation

$\chi^1,\chi^2,\chi^3$ représentent les susceptibilités linéaires et non linéaires du matériau.

En effet, le coefficient $\chi^1$ reflète son activité en optique linéaire.

Les coefficients $\chi^2$ et $\chi^3$ représentent les susceptibilités respectivement de second et troisième ordre. Ces susceptibilités reflètent l'anharmonicité du potentiel électrique dans le matériau.

Par ailleurs, les susceptibilités d'ordre impair, tel que la susceptibilité $\chi^3$ ne sont jamais nulles pour tous matériaux. Au contraire, les susceptibilités d'ordre pair tel que la susceptibilité quadratique $\chi^2$ sont nulles pour les matériaux présentant une centrosymétrie de charges.

Il est intéressant d'utiliser des matériaux présentant une polarisation non linéaire non nulle pour les applications en optique non linéaire telles que, par exemple, les dispositifs électrooptiques, les modulateurs électrooptiques, guidés ou non guidés ou pour les applications purement optiques telles que les amplificateurs paramétriques, les dispositifs doubleurs de fréquence.

Pour apprécier et mesurer le coefficient la susceptibilité $\chi^2$ des matériaux, on détermine celle-ci par comparaison avec celle d'un matériau de référence, par exemple le quartz ou le dihydrogéno-phosphate de potassium (KDP).

La mesure de la susceptibilité $\chi^2$ est réalisée généralement aux fréquences (-2ω; ω , ω) dans une expérience de doublement d'harmonique décrite dans l'article de S.K.KURTZ publié dans Quantum Electronics ed. H.RABIN, C.L. TANG academic Press, 1975, tome I pages 209 - 281.

Il est également possible de mesurer $\chi^2$ aux fréquences (-ω; ω, o) dans une expérience d'électrooptique. Pour cela, le film est déposé sur une lame de verre recouverte d'un oxyde conducteur transparent ($SnO_2$). La face extérieure du film est recouverte par une couche d'or semi-transparente, l'oxyde et l'or servant d'électrodes par lesquelles on polarise le film pour le rendre non centrosymétrique. Après refroidissement, l'ensemble est placé dans l'un des bras d'un interféromètre de MACH ZENDER et traversé sous incidence normale par un faisceau laser de longueur d'onde égale à 633 nm.

Le film est ensuite soumis à une tension alternative de 1 KHz et 10V.

La susceptibilité quadratique

$$\chi^{2}_{113}(-\omega;\omega;o)$$

est déduite du retard de phase Δ Φ provoqué par la tension appliquée au film par la relation suivante :

$$\Delta\Phi = \frac{2\pi}{\lambda} . L . \frac{\chi^{2}_{113}}{n} . \frac{V}{L} = \frac{\chi^{2}_{113} \times 2\pi\, V}{n.\lambda}$$

Dans laquelle : λ est la longueur d'onde laser

n est l'indice de réfraction du film

V est la tension électrique du champ appliqué au film

L est l'épaisseur du film.

Le deuxième coefficient de susceptibilité

$$\chi^{2}_{333}$$

est donné par la relation

$$\chi^{2}_{333} = 3.\chi^{2}_{113}$$

Cette relation est plus amplement décrite dans l'article de K.D. SINGER et al parue dans J. Opt. SOc. Am. B vol 4 n° 6 pp 968 et suiv. (1987).

Les susceptibilités

$$\chi^2_{113} \text{et} \chi^2_{333}$$

sont reliées au coefficient électrooptique $r_{ijk}$ par les relations suivantes :

$$r_{113} = \frac{-2\chi^2_{113}}{n^4} \text{ et } r_{333} = \frac{-2\chi^2_{333}}{n^4}$$

Dans lesquelles n représente l'indice de réfraction du matériau.

D'autres buts, détails et caractéristiques de l'invention apparaîtront plus clairement au vu des exemples donnés ci-dessous uniquement à titre indicatif et d'illustration.

Exemple 1 :

Préparation du polymère (A) de type polyuréthanne de motif récurrent :

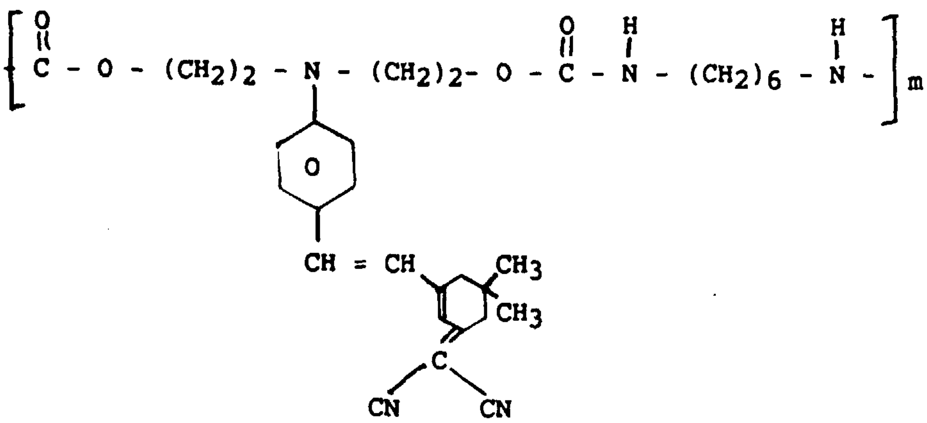

(A)

Ce polymère est obtenu par réaction d'un diisocyanate, l'hexaméthylène diisocyanate sur un composé de formule suivante :

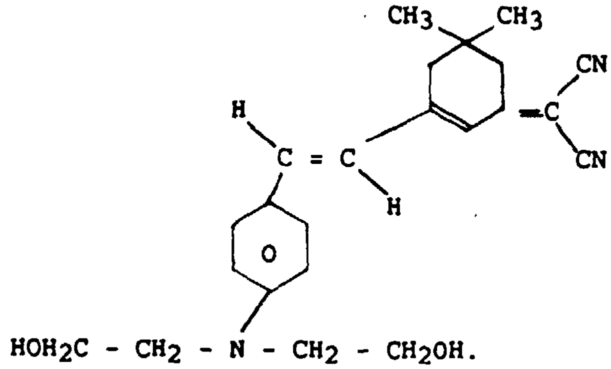

Ce composé est obtenu par réaction du composé de formule

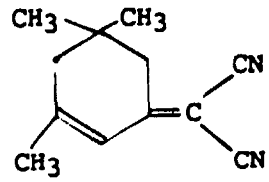

sur le composé de formule :

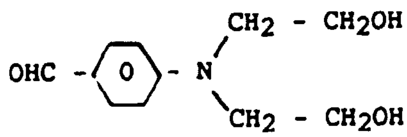

en milieu éthanolique et en présence de pipéridine comme catalyseur.

Le produit est récupéré par évaporation du solvant et séparation sur une colonne de gel de silice (éluant : acétate d'éthyle) sous la forme d'un solide rouge - violet présentant un point de fusion de 168°C.

Ce procédé de fabrication et les conditions opératoires de la réaction sont notamment décrits dans la demande de brevet allemand n° 2345189, l'article de Ralf LEMKE "Knoevenagel - Kondensationen in Dimethylformanid" publié dans Synthésis 5 (1974), 359 ou l'article "Solvatochromie von 80 µm in verschiedenen Alkoholen bei Arylidenisophorin - Abkömmlingen" du même auteur parue dans Chem. Ber, 103, (1970), 1894.

Ce composé est mis en solution dans un solvant anhydre (la 1,3 diméthylimidazolidinone). Cette solution est ensuite introduite dans une solution constituée d'hexaméthylène diisocyanate dans le même solvant que ci-dessus, contenant également un catalyseur de polycondensation tel que le dilaurate dibutylétain. Ce mode opératoire de préparation du composé A est classique et couramment utilisé pour la fabrication des polymères polyuréthannes. La température de réaction est de l'ordre de 105°C.

Après précipitation par coulée du milieu réactionnel dans de l'eau, on obtient un précipité rouge-lie de vin qui est récupéré par filtration.

La masse moléculaire en poids du polymère récupéré, déterminée par chromatographie d'exclusion de gel dans la N - méthyl pyrrolidone (NMP) est de 54300 g. (m est égal à environ 30)

Une analyse thermique différentielle montre qu'il n'y a pas de transition endothermique correspondant à la fusion. La température de transition vitreuse Tg est égale à 45°C, déterminée par la méthode du pendule à fiche.

Le polymère obtenu est soluble dans l'acétone, les solvants chlorés, le diméthyl formamide, le diméthylsulfoxyde, la N. méthyl pyrrolidone mais insoluble dans l'eau et les alcools.

Les analyses de spectrométrie ultraviolette, de RMN confirment la structure du polymère indiqué en début de paragraphe et montrent que la longueur d'onde d'adsorption maximale dans l'UV en milieu N méthylpirrolydone est égale à 520 nm.

Ce polymère après mise en forme selon la technique du spin-coating en film d'épaisseur 3,37 µm à partir d'une solution à 10 % dans la cyclohexanone, a été soumis à un champ électrique polarisant de 50 V/µm après chauffage à une température de l'ordre de 100°C pendant quelques seconds, puis refroidi à température ambiante.

La détermination de son activité en électrooptique à une longueur d'onde de 633 nm montre qu'il possède une susceptibilité quadratique

$$\chi^{2}_{333}(-\omega;\omega, o)$$

égale à 130 x $10^{-12}$ m.$V^{-1}$, soit un coefficient électrooptique $r_{333}$ = 50 x $10^{-12}$ m.$V^{-1}$

Exemple 2

Préparation du polymère (B) du type polyuréthanne de motif récurrent :

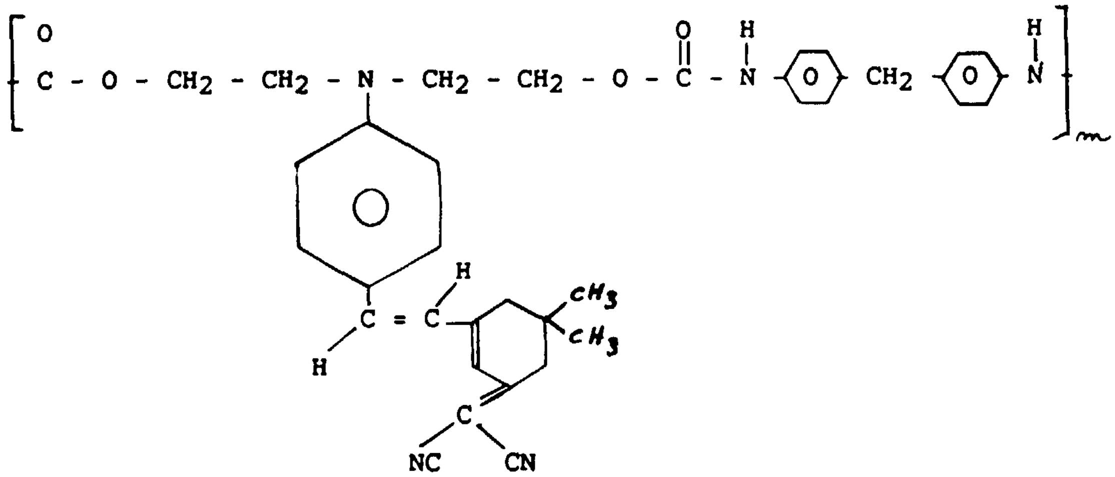

Ce polymère est obtenu de manière analogue à celui de l'exemple 1, en remplaçant l'hexaméthylène diisocyanate par le diphénylméthane-diisocyanate.

Le produit obtenu qui ne montre pas de transformation endothermique par analyse thermique différentielle a une température de transition vitreuse (Tg) égale à 90°C, une masse moléculaire en poids de 21000 (m est égal à 18 environ) et une longueur d'onde d'adsorption maximale de 505 nm. les caractéristiques ont été déterminées selon les méthodes décrites dans l'exemple 1.

La détermination de ces caractéristiques en optique non linéaire et plus particulièrement de sa susceptibilité de deuxième ordre

$$\chi^{2}_{333}$$

est réalisée selon le mode opératoire décrit dans l'exemple 1. Toutefois l'orientation des groupements est réalisée à une températue de 120°C pendant quelques minutes.

La détermination de son activité en électrooptique à une longueur d'onde laser de 633 nm montre que

$$\chi^{2}_{333}(-\omega, \omega, o)$$

est égale à 95 x $10^{-12}$ $mV^{-1}$.

Exemple 3 : Préparation d'un polymère réticulé

Pour la réalisation de ce polymère :

1er. On synthétise comme décrit dans l'exemple 1 un prépolymère, engageant un excès du diol par rapport au diisocyanate. Cet excès atteint 4 % molaire.

Le prépolymère ainsi obtenu est terminé majoritairement par des groupements hydroxyles. Il possède une température de transition vitreuse égale à 49°C.

2ème. Ce prépolymère est remis en solution dans la cyclohéxanone à une concentration de 15 %. On ajoute alors le catalyseur (dibutyle dilanate d'étain) et un léger excès par rapport aux groupements hydroxylés, du trimère de l'HDI de formule suivante :

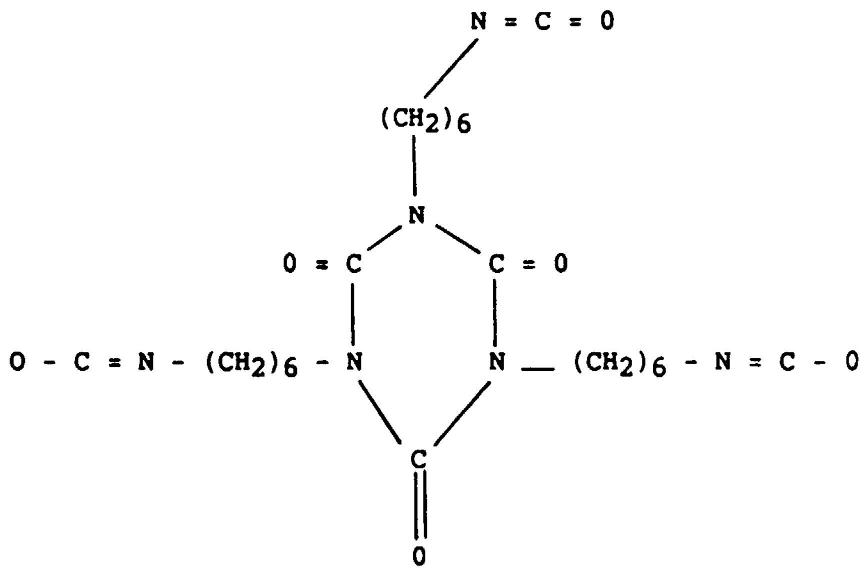

Le prépolymère est enduit au tire-film en film d'épaisseur 3,2 µm sur un support chauffant à partir d'une solution à 10 % dans le cyclohexanone, puis est soumis à un champ polarisant de 50 V/µm à une température de 50°C pendant 10 minutes. La température est ensuite portée à 120°C sous champ électrique, pour effectuer une réticulation complète, puis ramenée à l'ambiante.

Ainsi on obtient un matériau présentant une température de transition vitreuse de 80°C et une susceptibilité électrooptique $\chi^{(2)}(-\omega,\omega, o)$ à 633 nm de $80.10^{-12}$ $mV^{-1}$.

Exemple 4

Préparation d'un polymère (C) de type polyester et de motif récurrent :

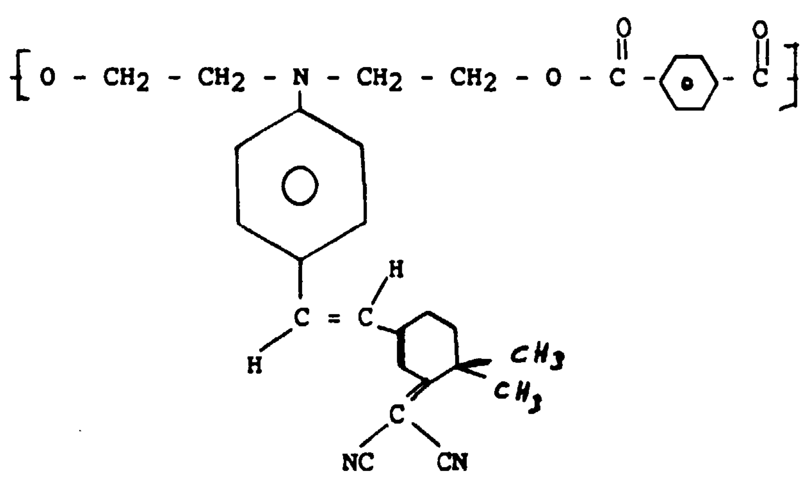

Ce polymère est obtenu par réaction d'un chlorure d'acide de formule

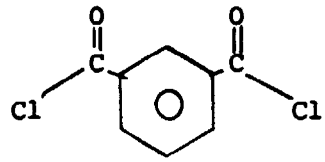

avec un composé de formule suivante :

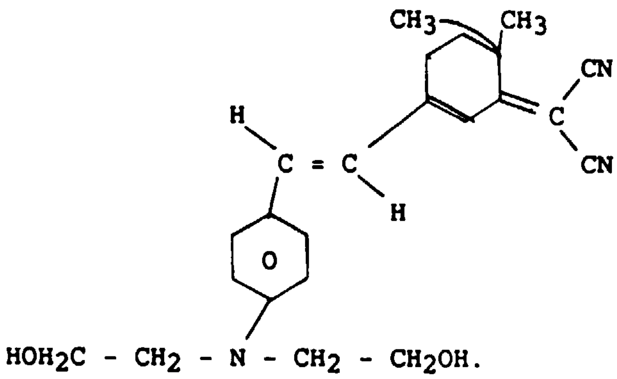

Cette réaction est conduite en présence de 1,3 diméthyl-2 imidazolidinone comme solvent et de triéthylamine, à une température de l'ordre de 90°C.

Le mélange réactionnel, après refroidissement est introduit dans de l'eau. Le précipité obtenu, rouge foncé, est lavé à l'eau puis séché sous vide à 60°C.

Les analyses de spectrométrie ultraviolette et RMN confirment la structure du polymère et montre que la longueur d'onde d'absorption maximale dans l'UV en milieu N méthylpirrolydone est égale à 512 nm. En outre, les masses moléculaires de ce polymère Mw et Mn sont respectivement égales à 6770 et 4800.

L'analyse thermique différentielle de ce polymère montre qu'il présente une température de transition vitreuse (Tg) égale à 142°C.

La détermination de son activité en électrooptique à une longueur d'onde laser de 633 nm montre que

$$\chi^{2}_{333}(-\omega;\omega,o)$$

est égale à 95 x$10^{-12}$ $mV^{-1}$.

**Revendications**

**1.** Polymères actifs en optique non linéaire, du type de ceux ayant un motif récurrent constitué par un premier composé difonctionnel et un second composé difonctionnel, liés entre eux par l'intermédiaire de leurs fonctions réactives respectives pour la polymérisation, au moins l'un des composés difonctionnels comprenant un groupement polaire à transfert de charges de structure suivante :

**D** - (radical à électrons délocalisés) - A

**A** étant un radical accepteur d'électrons et **D** un radical donneur d'électrons, caractérisés :

- en ce que le radical à électrons délocalisés est l'une des deux structures suivantes :

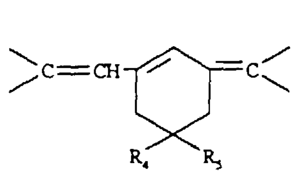 ; 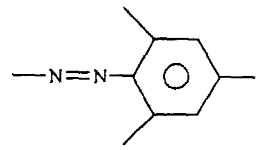

(I) (II)

dans lesquelles $R_4$ et $R_5$ sont identiques ou différents et représentent l'hydrogène ou un radical méthyle, éthyle ou propyle,

- en ce que les fonctions réactives pour la polymérisation sont portées par le radical donneur d'électrons **D**,
- et en ce que les radicaux donneurs d'électrons (D) sont des radicaux de formule :

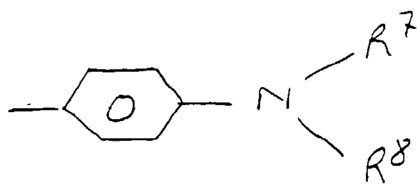

dans laquelle $R_7$ et $R_8$ identiques ou différents sont des radicaux comprenant une fonction réactive pour la polymérisation.

**2.** Polymères selon la revendication 1 caractérisés en ce que $R_7$ et $R_8$ ont la structure suivante :

$$-(CH_2)_m- OH \quad ; \quad -(CH_2)_p- CH=CH_2 \quad .$$

dans lesquelles m et p sont des nombres entiers, m étant compris entre 1 et 6 et p entre 0 et 6.

**3.** Polymères selon la revendication 1 ou 2 caractérisé en ce que les fonctions réactives pour la polymérisa-tion des composés difonctionnels sont choisies dans le groupe comprenant les fonctions alcools, amines, isocyanates, allyliques, vinyliques, acides.

**4.** Polymères selon l'une des revendications 1 à 3, caractérisé en ce que le premier et le second composé fonctionnel portent des fonctions réactives pour la polymérisation identiques.

**5.** Polymères selon l'une des revendications 1 à 3, caractérisé en ce que les fonctions réactives pour la polymérisation du premier composé difonctionnel sont différentes de celles portées par le second composé difonctionnel.

**6.** Polymères selon l'une des revendications 1 à 5, caractérisé en ce qu'ils sont réticulés par addition de composés trifonctionnels au mélange de composés difonctionnels.

**7.** Polymères selon l'une des revendications précédentes, caractérisés en ce que les radicaux accepteurs d'électrons **(A)** sont choisis parmis les radicaux suivants :

nitro, cyano, $-CO_2R_g$, $PO_3(R_g)_2$

$R_g$ étant un radical méthyle, éthyle ou propyle.

**8.** Matériau actif en optique non linéaire, caractérisé en ce qu'il comprend un polymère selon l'une des revendications précédentes, orienté par effet d'un champ électrique pour obtenir une non centrosymétrie de charges.

9. Procédé de fabrication de matériau actif en optique non linéaire selon la revendation 8, caractérisé en ce qu'il consiste à chauffer le matériau à une température au moins égale à la température de transition vitreuse du polymère, à soumettre ledit matériau chauffé à un champ électrique, puis à refroidir.

10. Procédé de fabrication de matériau actif en optique non linéaire selon la revendication 6, caractérisé en ce qu'il consiste à faire une polymérisation partielle du mélange comprenant les composés difonctionnels et des composés polyfonctionnels, à chauffer le prépolymère ainsi obtenu à une température supérieure à sa température de ramollissement ou sa température de transition vitreuse à soumettre le prépolymère chauffé à un champ électrique, puis à polymériser complètement le polymère.

11. Procédé de fabrication selon l'une des revendications 9 et 10, caractérisé en ce que la polymérisation ou prépolymérisation du polymère ou du matériau est obtenue par voie thermique, radicalaire, ionique ou par bombardement par des rayonnements.

12. Disopositif caractérisé en ce qu'il comprend un matériau selon la revendication 8.

**Patentansprüche**

1. Polymere mit nichtlinearen optischen Eigenschaften, die eine wiederkehrende Einheit aufweisen, die aus einer ersten bifunktionellen Verbindung und einer zweiten bifunktionellen Verbindung besteht, die über ihre betreffenden, zur Polymerisation reaktiven Funktionen miteinander verknüpft sind, wobei mindestens eine der bifunktionellen Verbindungen eine polare Gruppe mit Charge-transfer und folgender Struktur aufweist:

D-(Gruppe mit delokalisierten Elektronen)-A,

wobei A eine Elektronenakzeptorgruppe und D eine Elektronendonorgruppe bedeutet, dadurch gekennzeichnet,

- daß die Gruppe mit delokalisierten Elektronen eine der beiden folgenden Strukturen

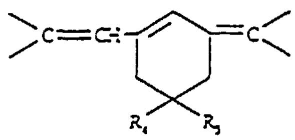

(I)

:

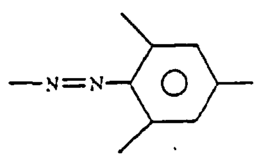

(II)

ist, worin $R_4$ und $R_5$, gleich oder verschieden sind und Wasserstoff oder Methyl, Ethyl oder Propyl darstellen,
- daß die zur Polymerisation reaktiven Funktionen von der Elektronendonorgruppe D getragen werden und
- daß die Elektronendonorgruppen D Gruppen der Formel

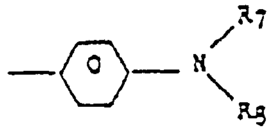

sind, in der $R_7$ und $R_8$, die gleich oder verschieden sind, Gruppen darstellen, die eine zur Polymerisation reaktive Funktionen enthalten.

2. Polymere nach Anspruch 1, dadurch gekennzeichnet, daß $R_7$ und $R_8$ die folgende Struktur

$$-(CH_2)_m-OH;\ -(CH_2)_p-CH=CH_2$$

aufweisen, worin m und p ganzzahlig sind und m 1 bis 6 und p 0 bis 6 betragen kann.

3. Polymere nach Anspruch 1 oder 2, dadurch gekennzeichnet, daß die zur Polymerisation reaktiven Funktionen der bifunktionellen Verbindungen unter Alkoholfunktionen, Aminfunktionen, Isocyanatfunktionen, Allylfunktionen, Vinylfunktionen und Säurefunktionen ausgewählt sind.

4. Polymere nach einem der Ansprüche 1 bis 3, dadurch gekennzeichnet, daß die erste und die zweite bifunktionelle Verbindung gleiche zur Polymerisation reaktive Funktionen aufweisen.

5. Polymere nach einem der Ansprüche 1 bis 3, dadurch gekennzeichnet, daß die zur Polymerisation reaktiven Funktionen der ersten bifunktionellen Verbindung von denen der zweiten bifunktionellen Verbindung verschieden sind.

6. Polymere nach einem der Ansprüche 1 bis 5, dadurch gekennzeichnet, daß sie durch Zusatz von trifunktionellen Verbindungen zu dem Gemisch von bifunktionellen Verbindungen vernetzt sind.

7. Polymere nach einem der vorhergehenden Ansprüche, dadurch gekennzeichnet, daß die Elektronenakzeptorgruppen (A) unter

Nitro, Cyano, $-CO_2R_g$ und $PO_3(Rg)_2$

ausgewählt sind, wobei $R_g$ Methyl, Ethyl oder Propyl bedeutet.

8. Material mit nichtlinearen optischen Eigenschaften, dadurch gekennzeichnet, daß es ein Polymer nach einem der vorhergehenden Ansprüche umfaßt, das durch ein elektrisches Feld orientiert ist, um eine nichtzentrosymmetrische Ladungsverteilung zu erzielen.

9. Verfahren zur Herstellung des Materials mit nichtlinearen optischen Eigenschaften nach Anspruch 8, gekennzeichnet durch Erhitzen des Materials auf eine Temperatur, die mindestens gleich der Glasübergangstemperatur des Polymers ist, Anlegen eines elektrischen Feldes an das erwärmte Material und anschließende Abkühlung.

10. Verfahren zur Herstellung des Materials mit nichtlinearen optischen Eigenschaften nach Anspruch 8, gekennzeichnet durch partielle Polymerisation eines Gemischs, das die bifunktionellen Verbindungen enthält, und von polyfunktionellen Verbindungen, Erhitzen des so erhaltenen Prepolymers auf eine oberhalb seiner Erweichungstemperatur oder seiner Glasübergangstemperatur liegende Temperatur, Anlegen eines elektrischen Feldes an das erhitzte Prepolymer und anschließende vollständige Polymerisation des Polymers.

11. Verfahren nach Anspruch 9 oder 10, dadurch gekennzeichnet, daß die Polymerisation oder Prepolymerisation des Polymers oder des Materials thermisch, radikalisch, ionisch oder durch Strahlungsbeschuß durchgeführt wird.

12. Optische Vorrichtung, dadurch gekennzeichnet, daß sie ein Material nach Anspruch 8 aufweist.

**Claims**

1. Non-linear optically active polymers, of the type of those having a repeating unit constituted by a first difunctional compound and a second difunctional compound, linked together via their respective reactive functions for the polymerisation, at least one of the difunctional compounds having a polar charge transfer group of the following structure:

**D - (radical with delocalised electrons) - A**

**A** being an electron acceptor radical and **D** an electron donor radical,
characterised:

- in that the radical with delocalised electrons is one of the following structures:

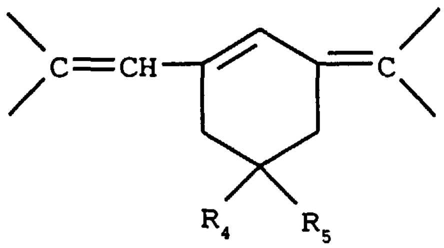

(I)

;

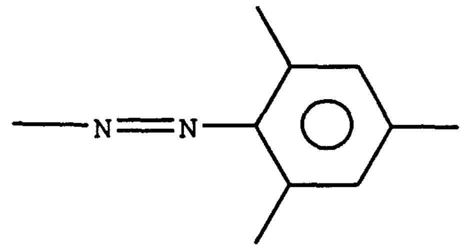

(II)

in which $R_4$, and $R_5$, are identical or different and represent hydrogen or a methyl, ethyl or propyl radical,
- in that the reactive functions for the polymerisation are carried by the electron donor radical **D**,
- and in that the electron donor radicals (**D**) are radicals of formula:

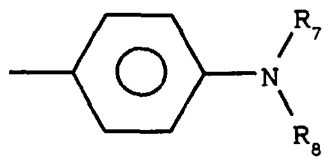

in which $R_7$ and $R_8$, identical or different, are radicals having a reactive function for the polymerisation.

2. Polymers according to claim 1, characterised in that $R_7$ and $R_8$ have the following structure:

$$-(CH_2)_m\text{-OH} ;\ -(CH_2)_p\text{-CH=CH}_2.$$

in which m and p are integers, m being between 1 and 6, and p between 0 and 6.

3. Polymers according to claim 1 or 2, characterised in that the reactive functions for the polymerisation of the difunctional compounds are selected from the group consisting of alcohol, amine, isocyanate, allylic, vinylic, and acid functions.

4. Polymers according to one of claims 1 to 3, characterised in that the first and second functional compound carry identical reactive functions for the polymerisation.

5. Polymers according to one of claims 1 to 3, characterised in that the reactive functions for the polymerisation of the first difunctional compound are different from those carried by the second difunctional compound.

6. Polymers according to one of claims 1 to 5, characterised in that they are cross-linked by the addition of trifunctional compounds to the mixture of difunctional compounds.

7. Polymers according to one of the preceding claims, characterised in that the electron acceptor radicals **(A)** are selected from the following radicals:

nitro, cyano, $\mathbf{-CO_2R_g}$, $\mathbf{-PO_3(R_g)_2}$

$\mathbf{R_g}$ being a methyl, ethyl or propyl radical.

8. Non-linear optically active material, characterised in that it comprises a polymer according to one of the preceding

claims, oriented by effect of an electrical field in order to obtain a non-centrosymmetry of charges.

**9.** Process for producing a non-linear optically active material according to claim 8, characterised in that it consists in heating the material at a temperature at least equal to the glass transition temperature of the polymer, in submitting said heated material to an electrical field, and then in cooling said material.

**10.** Process for producing a non-linear optically active material according to claim 8, characterised in that it consists in carrying out a partial polymerisation of the mixture comprising the difunctional compounds and polyfunctional compounds, in heating the prepolymer thus obtained at a temperature higher than its softening temperature or its glass transition temperature, in submitting the heated prepolymer to an electrical field, and then in completely polymerising the polymer.

**11.** Production process according to one of claims 9 and 10, characterised in that the polymerisation or prepolymerisation of the polymer or of the material is obtained by way of heat, of radicals, of ions, or of radiation bombardment.

**12.** Optical device characterised in that it comprises a material according to claim 8.